(19) **Europäisches Patentamt / European Patent Office / Office européen des brevets**

(11) **EP 1 986 349 A1**

(12) **EUROPEAN PATENT APPLICATION**
published in accordance with Art. 158(3) EPC

(43) Date of publication:
**29.10.2008 Bulletin 2008/44**

(51) Int Cl.:
*H04B 7/26* (2006.01)     *H04J 11/00* (2006.01)
*H04J 13/00* (2006.01)

(21) Application number: **07714274.3**

(22) Date of filing: **15.02.2007**

(86) International application number:
**PCT/JP2007/052744**

(87) International publication number:
**WO 2007/094415 (23.08.2007 Gazette 2007/34)**

(84) Designated Contracting States:
**DE GB**

(30) Priority: **17.02.2006 JP 2006040905**

(71) Applicant: **Sharp Kabushiki Kaisha**
**Osaka-shi,**
**Osaka 545-8522 (JP)**

(72) Inventors:
• **TSUBOI, Hidekazu**
  **Chiba-ken (JP)**

• **OH, Waho**
  **Chiba-ken (JP)**
• **KUBOTA, Minoru**
  **Chiba-ken (JP)**
• **HAMAGUCHI, Yasuhiro**
  **Chiba-ken (JP)**

(74) Representative: **Brown, Kenneth Richard et al**
**R.G.C. Jenkins & Co.**
**26 Caxton Street**
**London SW1H 0RJ (GB)**

(54) **MOBILE COMMUNICATION SYSTEM, MOBILE STATION DEVICE, BASE STATION DEVICE, AND MOBILE COMMUNICATION METHOD**

(57)    A mobile communication system includes a mobile station device and a base station device. The mobile station device has multiple modes concerning a gap section control in a state of being wirelessly connected to the base station device and includes a feedback-period setting unit that sets a feedback period for notifying the base station device of information concerning a downlink channel quality indication in each of the modes based on downlink-data requirement conditions. The base station device includes a resource-allocation-period setting unit that sets an uplink resource allocation period for feedback of the downlink channel quality indication in each of the modes or a downlink resource allocation period based on the downlink-data requirement conditions.

*FIG. 5*

EP 1 986 349 A1

**Description**

TECHNICAL FIELD

The present invention relates to a mobile communication system, a mobile station device, a base station device, and a mobile communication method. More specifically, the present invention relates to a mobile communication system, a mobile station device, a base station device, and a mobile communication method for radio communication between cells to which the same radio frequency is allocated and which belong to cellular mobile communication systems of the same radio access technology, cells to which different radio frequencies are allocated, and cells belonging to cellular mobile communication systems of different radio access technologies (including cells to which the same radio frequency is allocated as well as cells to which different radio frequencies are allocated).

Priority is claimed on Japanese Patent Application No. 2006-040905, filed February 17, 2006, the content of which is incorporated herein by reference.

BACKGROUND ART

In the cellular mobile communication system of the same RAT (radio access technology), multiple base station devices are dispersed in a service area, each base station device forms a radio area called a cell, and a mobile station device is connected, through a radio channel, to the base station device in the cell to which the mobile station device belongs, thereby implementing radio communication. Additionally, when the mobile station device moves to another cell during communication, HO (handover) is executed to continue the communication in the different cell.

The handover includes Intra-Freq-HO (Intra Frequency Handover) that is a handover between the same radio frequencies executed when the mobile station device moves between the cells to which the same radio frequencies are allocated, Inter-Freq-HO (Inter Frequency Handover) that is a handover between different frequencies executed when the mobile station device moves between the cells to which different radio frequencies are allocated.

In the cellular mobile communication systems of different wireless access technologies, there is Inter-RAT-HO (Inter RAT Handover) that is a handover between different radio access technologies executed when the mobile station device moves between the cells belonging to different radio access technologies. There is also Intra-RAT-HO (Intra RAT Handover) that is a handover between the cells belonging to the same radio access technology.

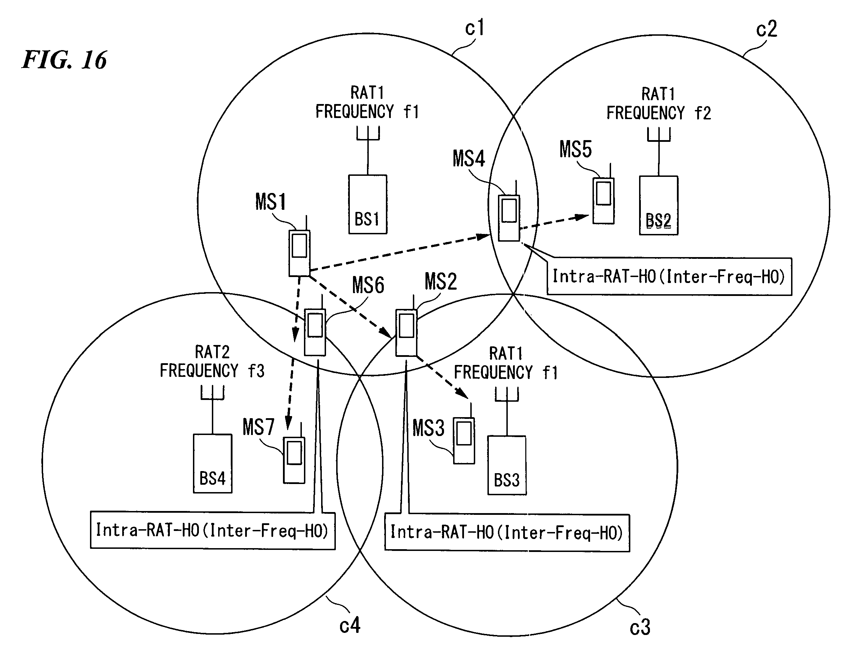

FIG. 16 schematically shows handover processing when the mobile station device moves. Each base station device BS1, BS2, BS3, and BS4 is disposed on a two-dimensional plane. The base station devices BS1, BS2, BS3, and BS4 execute radio communication with mobile station devices using frequencies f1, f2, f1, and f3, respectively. The base station devices BS1, BS2, BS3, and BS4 execute the radio communication with the mobile station devices using radio access technologies RAT1, RAT1, RAT1, and RAT2, respectively.

The base station devices BS1, BS2, BS3, and BS4 can execute radio communication with mobile station devices MS1, MS2, MS4, and MS6, mobile station devices MS4 and MS5, mobile station devices MS2 and MS3, and mobile station devices MS6 and MS7, which are located in cells c1, c2, c3, and c4 that are radio communication-available areas.

The mobile station device MS4 moving between the cells c1 and c2 executes Intra-RAT-HO (and Inter-Freq-HO). The mobile station device MS2 moving between the cells c1 and c3 executes Intra-RAT-HO (and Intra-Freq-HO). The mobile station device MS6 moving between the cells c1 and c4 executes Inter-RAT-HO (and Inter-Freq-HO).

Conventionally, for example, the radio access technology of W-CDMA (Wideband Code Division Multiple Access) defined by 3GPP (3rd Generation Partnership Project) has been standardized as the third-generation cellular-mobile-communication method, and services thereof have started sequentially (see non-patent document 1). In the W-CDMA system, a compressed mode is defined as a function of monitoring or measuring a base station device utilizing a different frequency upon Intra-RAT-HO (and Inter-Freq-HO) or Inter-RAT-HO (and Inter-Freq-HO).

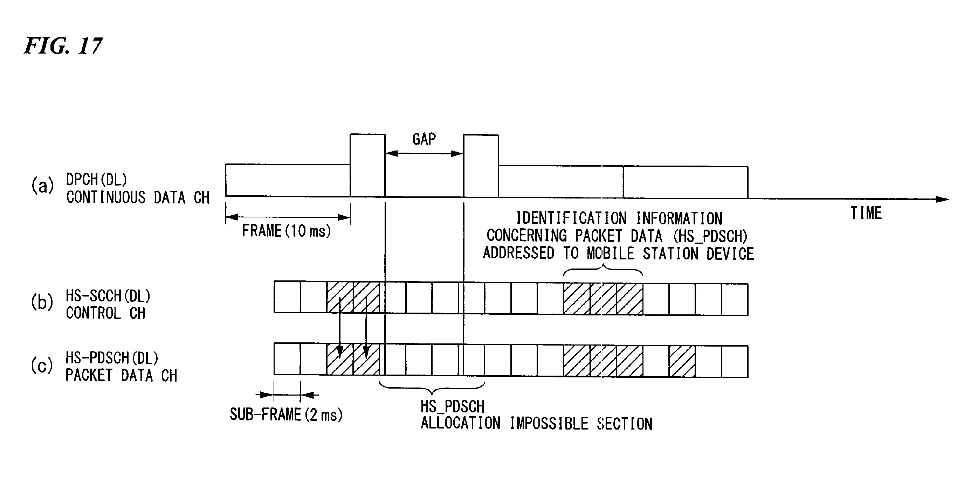

In FIG. 17, (a) schematically shows a case where the compressed mode is applied to a W-CDMA dedicated channel, and monitoring or measuring of the base station device utilizing the different frequency is executed. The base station device sets a gap section that is a transmission intermission as shown in FIG. 17 at (a), and suspends data transmission over DPCH (dedicated physical channel) at the gap section. On the other hand, the mobile station device switches the frequency utilizing the gap section, and monitors the base station device utilizing the different frequency.

In 3GPP, HSDPA (High Speed Downlink Packet Access) that implements high-speed downlink packet transmission of approximate maximum transmission speed of 14. 4 Mbps that is the expansion of the W-CDMA radio interface is standardized (see non-patent document 2). In the downlink, HS-SCCH (High Speed-Downlink Shared Control Channel) and HS-PDSCH (High Speed-Physical Downlink Shared Channel) are additionally defined as independent channels different from the dedicated channel to which the compressed mode is normally applied. In the uplink, HS-DPCCH (High Speed Dedicated Physical Control Channel) is defined additionally.

AMCS (Adaptive Modulation and Coding Scheme) is adopted in HSDPA. The AMCS is a method in which radio transmission parameters, such as the data-modulation multiple-value number of the shared data channel, an error correcting method, an error-correction encoding ratio, the data-modulation multiple-value number, a code spreading factor of time and frequency axes, and the multi-code multiplexed number, are switched according to a downlink CQI (Channel Quality Indication) that is a propagation path condition of each mobile station device to efficiently execute the high-speed packet-data transmission. Additionally, HARQ (Hybrid Automatic Repeat reQuest) is adopted. The mobile station device feeds ACK/NACK (Acknowledgement/Negative Acknowledgement) that is received transmittal confirmation information, and the CQI back to the base station device over the dedicated control channel.

In FIG. 17, (b) and (c) schematically show an example of a packet signal transmitted from the base station device to the mobile station device. In FIG. 17, (b) schematically shows an example of a shared control channel transmitted from the base station device to the mobile station device. In FIG 17, (c) schematically shows an example of the shared data channel transmitted from the base station device to the mobile station device.

Also in HSDPA, when the monitoring or the measuring of the base station device utilizing the different frequency is executed, data transmission to/from the base station device cannot be executed on the mobile station device. Therefore, allocation of packet data addressed to the mobile station device is not executed for an interval of the shared data channel corresponding to the gap section. Before the gap section is generated, the base station device instructs the mobile station device to suspend the data allocation of the shared data channel using the shared control channel. The mobile station device that has received the instruction generates a gap section, and monitors or measures the base station device utilizing the different frequency (including a case of monitoring or measuring another base station device utilizing the same frequency).

In other words, in the case of FIG. 17 at (a), the gap section is generated by data compression, etc., with respect to continuous data addressed to a mobile station device.

In the case of FIG. 17 at (b) and (c), the gap section is generated by not allocating a packet control signal and packet data that are addressed to the mobile station device to the gap section.

Currently, EUTRA (Evolved Universal Terrestrial Radio Access) and EUTRAN (Evolved Universal Terrestrial Radio Access Network) are under consideration. In addition, OFDMA (Orthogonal Frequency Division Multiplexing Access) is proposed as an EUTRA downlink. The AMCS technology is applied to the OFDMA system as the EUTRA technology (see non-patent documents 3 and 4).

In addition, a downlink radio-frame configuration and a radio-channel mapping method are proposed in EUTRA (see non-patent document 4).

As a gap control method for monitoring or measuring the base station device utilizing the different frequency upon Intra-RAT-HO (and Intra-Freq-HO) and Inter-RAT-HO (and Inter-Freq-HO) of EUTRA/EUTRAN, a gap control method based on a signaling control by the base station device and the mobile station device similar to HSDPA and the autonomous gap control method based on measuring an instantaneous CQI sample and feedback thereof to the base station device that are executed by the mobile station device are proposed (see non-patent document 5).

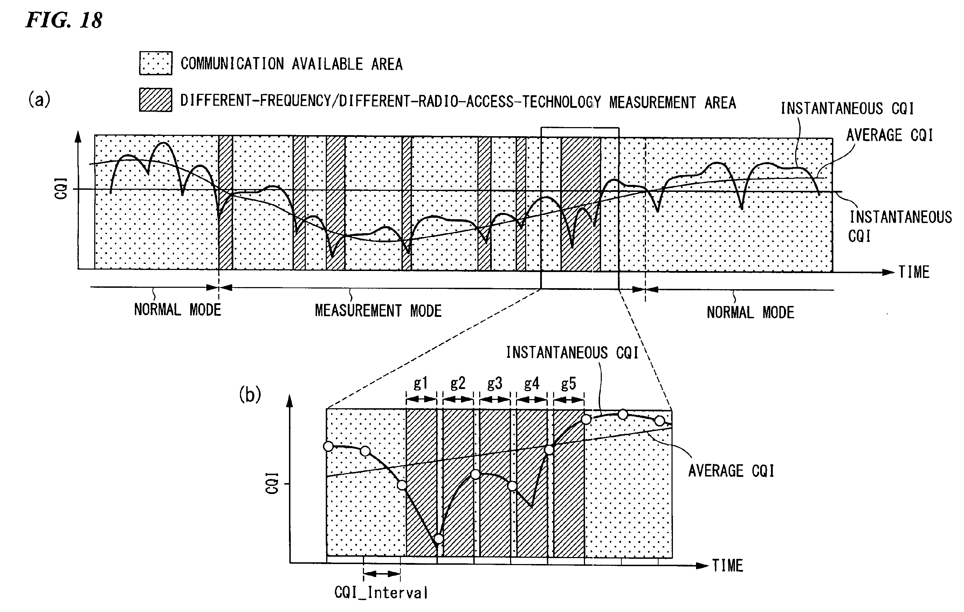

FIG. 18 schematically shows an example of the gap control method that has been proposed conventionally. The mobile station device receives a shared pilot channel, measures an instantaneous CQI at a given interval of CQI_ Interval, and reports the measured instantaneous CQI to the base station device. At the same time, the mobile station device calculates an average CQI by averaging the instantaneous CQIs at a given period (system parameter). The mobile station device compares the average CQI with a CQI threshold of the system parameter. When the average CQI is greater than the CQI threshold, the mobile station device sets a normal mode. When the average CQI is less than the CQI threshold, the mobile station device sets a measurement mode for monitoring or measuring the base station device utilizing the different frequency.

When the measured instantaneous CQI is smaller than the average CQI in the measurement mode, the mobile station device suspends reception or transmission at the frequency utilized by the connected base station device, and generates a gap section. Similar to the mobile station device, the base station device receives the report of the instantaneous CQI, and calculates an average CQI of the mobile station device. The calculated average CQI is compared with a CQI threshold of a system parameter. When the average CQI is greater than the CQI threshold, the normal mode is set in the base station device. When the average CQI is less than the CQI threshold, a measurement mode for monitoring or measuring the base station utilizing the different frequency is set in the base station device. When the measured instantaneous CQI is smaller than the average CQI in the measurement mode, the base station device suspends the transmission of packet data addressed to the connected mobile station device, and generates a gap section. As shown in FIG. 18 at (a), the mobile station device terminates the gap section after the completion of the monitoring or the measuring of the different frequency or the base station device, and resumes the measuring of an instantaneous CQI and the report of the measured instantaneous CQI. Then, the mobile station device continues similar processing. In FIG. 18, (b) shows a state where multiple gaps g1 to g5 are generated continuously.

Non-patent Document 1: "W-CDMA Mobile Communication System" by Keiji Tachikawa, ISBN 4-621-04894-5

Non-patent Document 2: 3GPP TR (Technical Report) 25.858, and 3GPP HSDPA-specification-related document (http://www.3gpp.org/ftp/Specs/html-info/25-series.htm)

Non-patent Document 3: 3GPP TR (Technical Report) 25.913, V2.1.0 (2005-05) , Requirements for evolved Universal Terrestrial Radio Access (UTRA) and Universal Terrestrial Radio Access Network (UTRAN) (http://www. 3gpp.org/ftp/Specs/html-info/25913.htm)

Non-patent Document 4: 3GPP TR (Technical Report) 25.814, V0.4.2 (2005-05) , Physical Layer Aspects for Evolved UTRA (http://www.3gpp.org/ftp/Specs/html-info/25814.htm)

Non-patent Document 5: NTT DoCoMo, Inc. "Measurement for LTE Intra-and Inter-RAT Mobility", 3GPP TSG RAN WG2 Meeting # 50, Sophia Antipolis, France, 9-13 January, 2006

DISCLOSURE OF THE INVENTION

Problems to be Solved by the Invention

Although the autonomous gap generation method for monitoring or measuring the base station device utilizing the different frequency upon Intra-RAT-HO (and Inter-Freq-HO) and Inter-RAT-HO (and Inter-Freq-HO) of EUTRA/ EUTRAN is disclosed in non-patent document 5, a gap-generation-period control method or a gap-generation-frequency control method is not disclosed.

The operation state of the mobile station device includes, for example, an idle mode that is a state where packet data communication is not in execution and an active mode that is a state where packet data communication is in execution. In addition, a movement of the mobile station device and a change in the traveling speed cause changes of the position in a cell, radio wave environment, and the like. In the idle mode, the monitoring or the measurement period of the base station device provided around the mobile station device is set large (for example, a period of a few seconds) for lower power consumption. In the active mode, transmission speed and transmission frequency of packet data differs depending on requirement conditions of service category (for example, VOIP (Voice over Internet Protocol), a video phone, a web-page browsing, etc.) and QoS (Quality of Service), for example. In other words, the instantaneous-CQI measurement period differs. In addition, when propagation path loss at a cell edge and fading variation are extensive, a requirement for the instantaneous-CQI measurement period in the measurement mode varies according to, for example, a scheduling algorithm of packet data.

The present invention is made in view of the above circumstances, and an object of the present invention is to provide a mobile communication system, a mobile station device, a base station device, and a mobile communication method that can implement high communication quality and low power consumption by appropriately setting a measurement period of a channel quality indication such as an instantaneous CQI.

Means for Solving the Problems

To solve the above problems, a mobile communication system of an aspect of the present invention includes a mobile station device and a base station device. The mobile station device includes: a first mode determining unit that determines, in a state where the mobile station device is wirelessly connected to the base station device, whether the mobile station device is in a measurement mode in which the mobile station device can execute monitoring of a peripheral base station or a normal mode in which the mobile station device ceases to execute the monitoring; and a feedback-period setting unit that sets a feedback period for notifying the base station device of information concerning a downlink channel quality indication according to which mode the mobile station device is in. The base station device includes: a second mode determining unit that determines which mode the mobile station device is in; and a resource-allocation-period setting unit that sets an uplink resource allocation period for feedback of the channel quality indication or a downlink resource allocation period according to which mode the mobile station device is in.

The second mode determining unit in the mobile communication system of an aspect of the present invention executes the determination based on the channel quality indication fed back from the mobile station device.

The second mode determining unit in the mobile communication system of an aspect of the present invention regards a mode notified by the mobile station device as a determination result.

A mobile communication system of an aspect of the present invention includes a mobile station device and a base station device. The mobile station device includes: a first mode determining unit that determines, in a state where the mobile station device is wirelessly connected to the base station device, whether the mobile station device is in a measurement mode in which the mobile station device can execute monitoring of a peripheral base station or a normal mode in which the mobile station device ceases to execute the monitoring; and an intermittent-reception-period setting unit that sets, according to which mode the mobile station device is in, an intermittent reception period for confirming a call from the base station device in an idle mode.

The feedback-period setting unit in the mobile communication system of an aspect of the present invention sets feedback periods respectively in the normal mode and the measurement mode based on requirement conditions of downlink data when the mobile station device is in data communication.

The feedback-period setting unit in the mobile communication system of an aspect of the present invention sets the feedback period based on a traveling speed of the mobile station device.

A mobile station device of an aspect of the present invention is wirelessly connected to a base station device, and includes: a first mode determining unit that determines whether the mobile station device is in a measurement mode in which the mobile station device can execute monitoring of a peripheral base station or a normal mode in which the mobile station device ceases to execute the monitoring; and a feedback-period setting unit that sets a feedback period for notifying the base station device of information concerning a downlink channel quality indication according to which mode the mobile station device is in.

A mobile station device of an aspect of the present invention is wirelessly connected to a base station device, and includes: a first mode determining unit that determines whether the mobile station device is in a measurement mode in which the mobile station device can execute monitoring of a peripheral base station or a normal mode in which the mobile station device ceases to execute the monitoring; and an intermittent-reception-period setting unit that sets an intermittent reception period for confirming a call from the base station device in an idle mode according to which mode the mobile station device is in.

A base station device of an aspect of the present invention is wirelessly connected to a mobile station device, and includes: a second mode determining unit that determines whether the mobile station device is in a measurement mode in which the mobile station device can execute monitoring of a peripheral base station or a normal mode in which the mobile station device ceases to execute the monitoring; and a resource-allocation-period setting unit that sets an uplink resource allocation period for feedback of a channel quality indication or a downlink resource allocation period according to which mode the mobile station device is in.

A mobile communication method of an aspect of the present invention includes: determining, by a mobile station device wirelessly connected to a base station device, whether the mobile station device is in a measurement mode in which the mobile station device can execute monitoring of a peripheral base station or a normal mode in which the mobile station device ceases to execute the monitoring; setting, by the mobile station device, a feedback period for notifying the base station device of information concerning a downlink channel quality indication according to which mode the mobile station device is in; determining, by the base station device, which mode the mobile station device is in; and setting, by the base station device, an uplink resource allocation period for feedback of the channel quality indication or a downlink resource allocation period according to which mode the mobile station device is in.

A mobile communication method of an aspect of the present invention includes: determining, by a mobile station device wirelessly connected to a base station device, whether the mobile station device is in a measurement mode in which the mobile station device can execute monitoring of a peripheral base station or a normal mode in which the mobile station device does not execute the monitoring; and setting, by the mobile station device, an intermittent reception period for confirming a call from the base station device in an idle mode according to which mode the mobile station device is in.

A mobile communication method of an aspect of the present invention includes: determining, by a mobile station device wirelessly connected to a base station device, whether the mobile station device is in a measurement mode in which the mobile station device can execute monitoring of a peripheral base station or a normal mode in which the mobile station device ceases to execute the monitoring; and setting, by the mobile station device, a feedback period for notifying the base station device of information concerning a downlink channel quality indication according to which mode the mobile station device is in.

Effects of the Invention

In the mobile station device of the present invention, the first mode determining unit determines, in a state where the mobile station device is wirelessly connected to the base station device, whether the mobile station device is in a measurement mode in which the mobile station device can execute monitoring of a peripheral base station or a normal mode in which the mobile station device does not execute the monitoring, and the feedback-period setting unit sets a feedback period for notifying the base station device of information concerning a downlink channel quality indication according to which mode the mobile station device is in. In the base station device of the present invention, the second mode determining unit determines which mode the mobile station device is in, and the resource-allocation-period setting unit sets an uplink resource allocation period for feedback of the channel quality indication or a downlink resource allocation period according to which mode the mobile station device is in.

Thus, both the mobile station device and the base station device set different feedback periods according to which mode the mobile station device is in, and the number of times information concerning a channel quality indication is fed back from the mobile station device to the base station device is adjusted, thereby enabling reduction in power consumption of the mobile station device.

BRIEF DESCRIPTION OF THE DRAWINGS

FIG. 1 is a graph schematically showing an example downlink radio frame of EUTRA based on 3GPP;

FIG 2 is a graph showing a simulation result of packet data scheduling;

FIG. 3 is a graph schematically showing another example of a selection method of instantaneous-CQI measurement periods of CQI_Interval_1 and CQI_Interval_2;

FIG. 4 is a block diagram showing a configuration of a mobile station device according to a first embodiment of the present invention;

FIG. 5 is a block diagram showing a configuration of a feedback-period setting unit 34 (shown in FIG. 4) according to the first embodiment of the present invention;

FIG. 6 is a block diagram showing a configuration of a base station device according to the first embodiment of the present invention;

FIG. 7 is a block diagram showing a configuration of a resource-allocation-period setting unit 43 (shown in FIG. 6) according to the first embodiment of the present invention;

FIG. 8 is a flowchart showing processing of the feedback-period setting unit according to the first embodiment of the present invention;

FIG. 9 is a flowchart showing processing of resource-allocation-period setting unit according to the first embodiment of the present invention;

FIG. 10 is a block diagram showing another example of the mobile station device according to the first embodiment of the present invention;

FIG. 11 is a block diagram showing another example of the resource-allocation-period setting unit 43 (shown in FIG 6) of the base station device according to the first embodiment of the present invention;

FIG. 12 is a graph schematically showing a method of monitoring or measuring a peripheral base station device in an idle mode when a system frequency band of the base station device is 20 MHz and a frequency band of the mobile station device is 5 MHz;

FIG. 13 is a graph schematically showing a method of monitoring or measuring a peripheral base station device in an active mode when a system frequency band of the base station device is 20 MHz and a frequency band of the mobile station device is 5 MHz;

FIG. 14 is a graph schematically showing intermittent reception of the mobile station device in the idle mode;

FIG. 15 is a graph schematically showing an example of a selection method of instantaneous-CQI measurement periods of CQI_Interval_1 and CQI_Interval_2;

FIG. 16 is a schematic plan view showing handover processing when the mobile station device moves;

FIG. 17 is a graph schematically showing a dedicated channel transmitted from the base station device to the mobile station device; and

FIG. 18 is a graph schematically showing a gap control method that has been used conventionally.

Descriptions of Numerals

| | |
|---|---|
| 11 | average-CQI calculating unit |
| 12 | memory |
| 13 | mode determining unit |
| 14 | feedback-period calculating unit |
| 21 | average-CQI calculating unit |
| 22 | memory |
| 23 | mode determining unit |
| 24 | resource-allocation-period calculating unit |
| 30 | communication unit |
| 31 | timer |
| 32 | control unit |
| 33 | instantaneous-CQI measuring unit |
| 34 | feedback-period setting unit |
| 35 | instantaneous-CQI-measurement-period-control-signal generating unit |
| 40 | communication unit |
| 41 | timer |

43    resource-allocation-period setting unit

BEST MODE FOR CARRYING OUT THE INVENTION

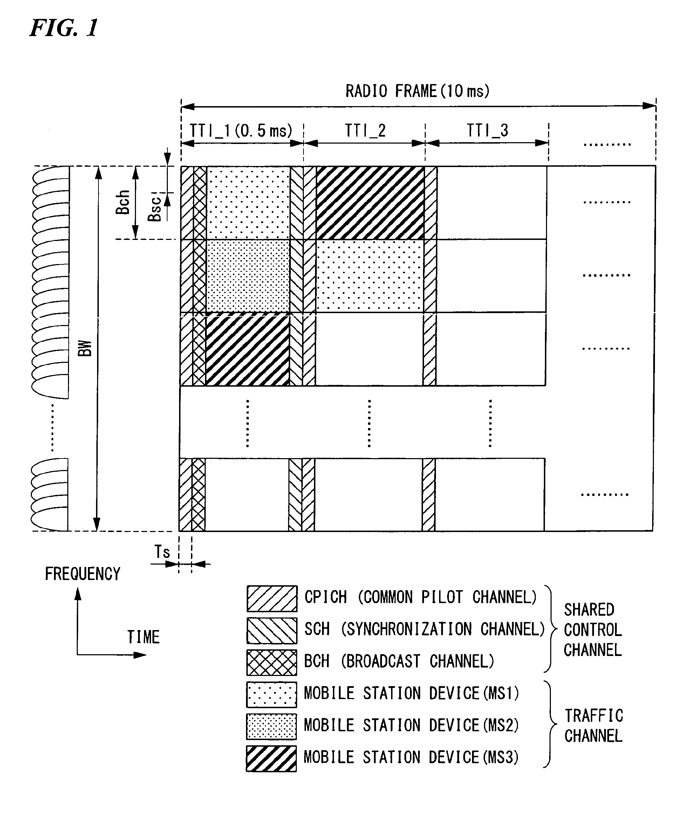

A mobile communication system according to a first embodiment of the present invention is explained. FIG. 1 schematically shows an example of a radio frame configuration in an E-UTRA downlink based on 3GPP. As shown in FIG. 1, the horizontal and the vertical axes indicate time and frequency, respectively. The downlink radio frame is a bundle of subcarriers, and includes two-dimensional radio RBs (resource blocks) defined by a frequency bandwidth Bch and a TTI (Transmission Timing Interval). BW, Bch, Bsc, and Ts represent a downlink frequency bandwidth, a resource-block frequency bandwidth, a subcarrier frequency bandwidth, and an OFDM symbol length, respectively.

As shown in FIG. 1, CPICH (Common Pilot Channel) is mapped to the head of each TTI, and BCH (Broadcast Channel) and SCH (Synchronization Channel) are mapped to the head of each radio frame. A rest part of each resource block is used as a TCH (Traffic Channel), and mapped to each mobile station device using AMCS.

Upon the power being turned on, the mobile station device receives the synchronization channel from the base station device, and identifies a carrier offset, an OFDM symbol timing, a radio frame timing, a TTI timing, a cell group index/cell index (e.g., scramble-code group index/scramble code index), etc. Then, the mobile station device receives system broadcast information such as unique information on the base station device over the broadcast channel, enters the idle mode after position registration, and then monitors downlink PICH (Paging Indicator Channel) and a peripheral base station. Upon a call from the base station device, the mobile station device is wirelessly connected to the base station device through PCH (Paging Channel) after the wireless connection procedure, and enters the active mode. Then, the mobile station device measures an instantaneous CQI, and feeds the measured instantaneous CQI back to the base station device. The idle mode indicates a state where the mobile station device is not executing packet data communication with the base station device. The active mode indicates a state where the mobile station device is executing packet data communication with the base station device. Downlink SCCH (Shared Control Channel) may be used in lieu of PICH and PCH.

The base station device receives the instantaneous CQI of each mobile station device, and executes packet data allocation to each resource block of the downlink traffic channel (packet data scheduling). Although the packet data allocation is sometimes referred to as a packet data scheduling, a resource allocation, and a resource block allocation, these terms have the same meaning.

As an example of the packet data allocation, a localized allocation in which a resource block of a channel in a good condition of a propagation path is allocated to a user of little propagation path variation for a multi-user diversity effect, and a distributed allocation in which packet data is dispersed in a resource block (or subcarriers therein) of a channel of a wide frequency band and allocated to a user of significant propagation path variation for a frequency diversity effect are considered.

As the packet-data scheduling method, the algorithms of RR (Round Robin), MaxCIR (Maximum CIR), and PF (Proportional Fairness) are known.

RR is a method of equally allocating the resource blocks of the downlink traffic channel irrespective of the downlink CQI conditions of each mobile station device (user). RR is a method in which fairness is highly prioritized, the effect of AMCS is small, and the average throughput of the entire cell is the smallest in comparison to other methods.

MaxCIR is a method of allocating the resource blocks of the downlink traffic channel to the mobile station device having the maximum instantaneous CQI. For the mobile station device having a high instantaneous CQI, high throughput is implemented with the AMCS effect, and the downlink average throughput of the entire cell increases. However, few resource blocks are allocated to the mobile station device having a low instantaneous CQI, the throughput is very small, and unfairness among the mobile station devices is significant.

PF is a method of allocating the resource blocks of the traffic channel to the mobile station device having an instantaneous CQI greater than the average CQI based on the ratio between the instantaneous CQI and the average CQI. With the resource-block allocation time being substantially equal for each mobile station device, the allocation of resource blocks is implemented preferentially for a user of a preferable CQI. However, the average throughput of the entire cell decreases to some extent, but not to the same extent as RR.

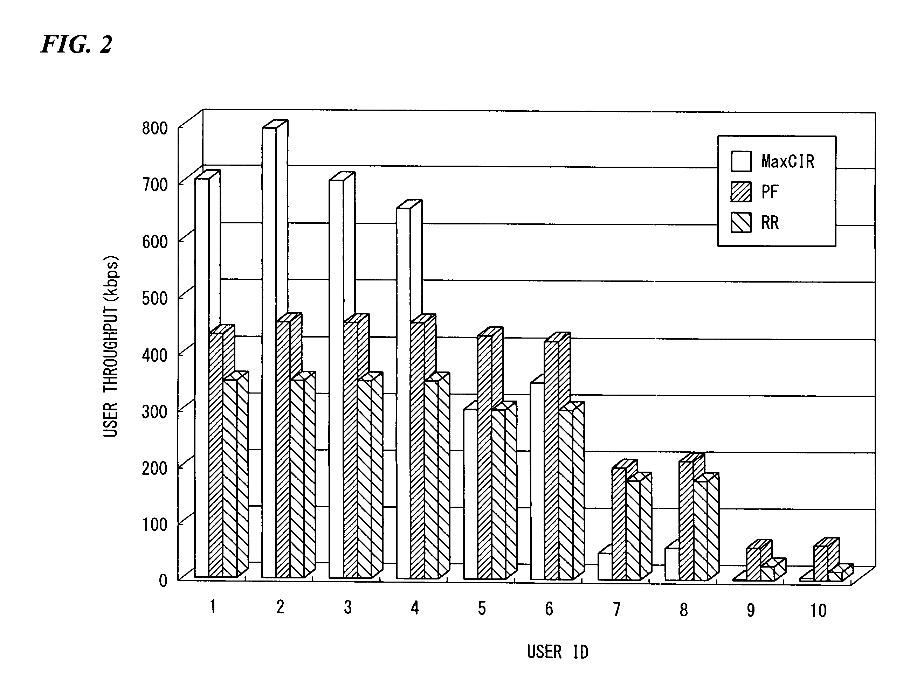

FIG. 2 is a graph showing a simulation result of a packet data scheduling in HSDPA as an example. As shown in FIG. 2, the horizontal and the vertical axes represent a user ID and a user throughput, respectively. A radio link parameter is compliant with 3GPP. The chip rate is 3.84 Mc/sec, the code spreading factor is 16, and the code multiplexed number is 10. The traveling speed of the mobile station device is 3 km/h (on foot), and other cell interference is considered in two-path Rayleigh fading and a 19-cell environment.

The distance from the base station device to the mobile station devices MS 1 and MS 2 is 0.1 (normalized value of a cell radius), the distance to the mobile station devices MS 3 and MS 4 is 0.3, ..., and the distance to the mobile station devices MS 9 and MS 10 is 0.9, which are selected randomly from the center cell so that the number of mobile station devices in the active mode is 10. As shown in FIG. 2, since the smaller the user ID (the number of the mobile station device), the closer to the base station device the mobile station device is, the CQI indicates preferable characteristics, thereby implementing a high throughput as a result.

In the PF method, although packet data can be allocated to the mobile station device located at a cell edge, the entire cell throughput decreases. In the MaxCIR method, although the mobile station device located in the proximity of the cell can implement high throughput, little packet data can be allocated to the mobile station device located at a cell edge. A similar result is assumed in the OFDMA method of EUTRA.

With the simulation result shown in FIG. 2, it is assumed that the mobile station device located at a cell edge has a high possibility of entering the measurement mode, and obtains low throughput even if switching to the active mode in the measurement mode.

In the present embodiment, an instantaneous-CQI measurement period (instantaneous-CQI sampling interval or period) in the normal mode and the measurement mode of the mobile station device in the active mode is changed.

In the case of the active mode, transmission speed and transmission frequency of downlink packet data differs depending on requirement conditions of service category and QoS. In other words, the instantaneous-CQI measurement period differs. In addition, when propagation path loss at a cell edge and fading variation are extensive, a requirement for the instantaneous-CQI measurement period in the measurement mode varies according to, for example, a scheduling algorithm of packet data.

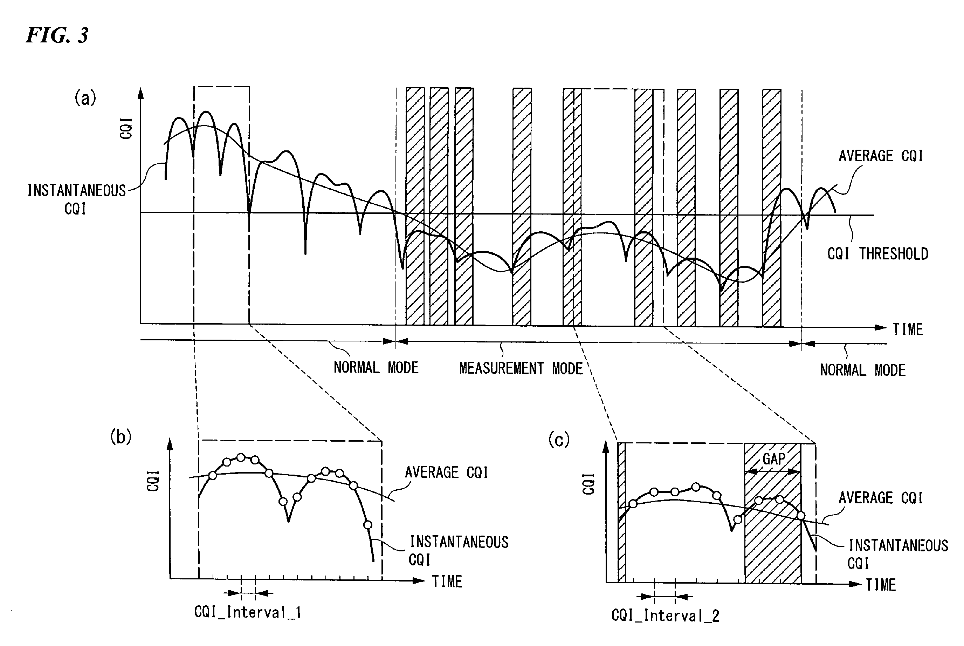

In the present embodiment, as shown in FIG. 3, two different values of CQI_Interval_1 and CQI_Interval_2 are defined with respect to the instantaneous-CQI measurement period of CQI_Interval of the mobile station device in the active mode, and the two values are selected. A value satisfying system requirements in the normal mode is selected for CQI_Interval_1. A value satisfying downlink system requirements during communication is selected for CQI_Interval_ 2 in consideration of a system parameter in the measurement mode, downlink service category, requirements of QoS, and the like. For example, the higher the QoS is, the shorter period is set to CQI_Interval.

When the value of CQI_Interval_2 is greater than the value of CQI_Interval_1, uplink allocation for the mobile station device to execute feedback of an instantaneous CQI decreases. As a result, uplink resource utilization efficiency of another mobile station device in the normal mode is enhanced. In addition, an idle time of the mobile station device becomes longer since the number of times the instantaneous CQI is notified to the base station device decreases. For example, if 2x CQI_Interval_1=CQI_Interval_2, the number of times the instantaneous CQI is notified to the base station device decreases by half.

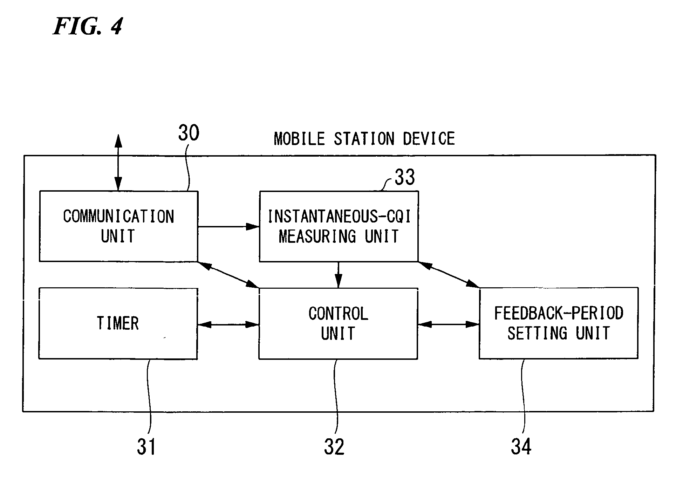

FIG. 4 is a block diagram showing a configuration of a mobile station device according to a first embodiment of the present invention. The mobile station device includes a communication unit 30, a timer 31, a control unit 32, an instantaneous-CQI measuring unit 33, a feedback-period setting unit 34 (a feedback-period setting unit, an intermittent-reception-period setting unit).

The communication unit 30 transmits an instantaneous CQI measured by the instantaneous-CQI measuring unit 33 to a base station device with radio communication, and transmits and receives packet data to and from the base station device.

The instantaneous-CQI measuring unit 33 measures an instantaneous CQI at a given time. The timer 31 measures time. The control unit 32 controls each unit of the mobile station device.

The feedback-period setting unit 34 sets a period for transmitting the instantaneous CQI to the base station device. The mobile station device measures the period set by the feedback-period setting unit 34 using the timer 31, and transmits the instantaneous CQI to the base station device.

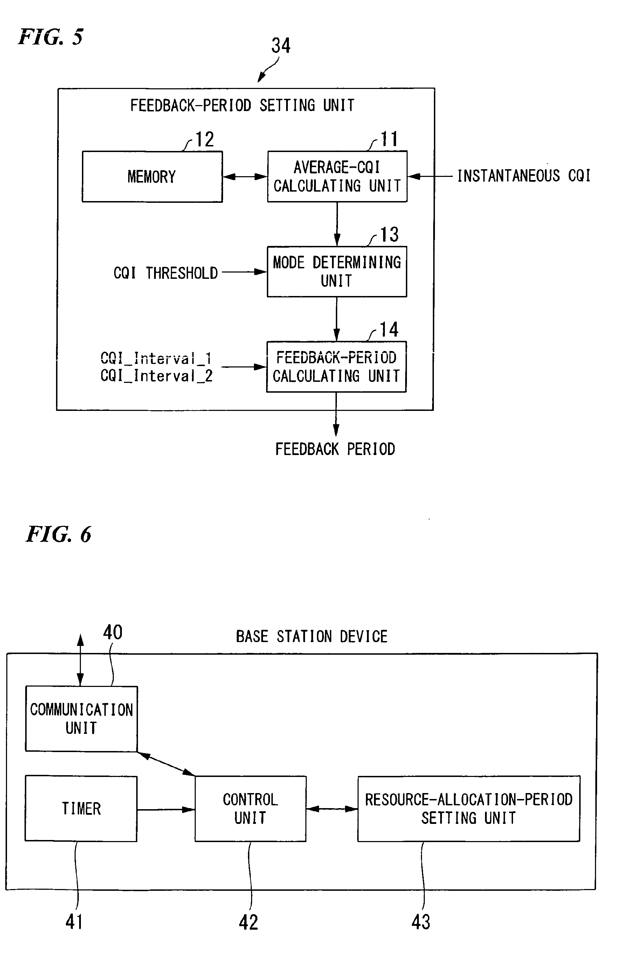

FIG. 5 is a block diagram showing the feedback-period setting unit 34 (shown in FIG. 4) according to the first embodiment of the present invention. The feedback-period setting unit 34 includes an average-CQI calculating unit 11, a memory 12, a mode determining unit 13 (first mode determining unit), and a feedback-period calculating unit 14.

The average-CQI calculating unit 11 calculates an average CQI based on the instantaneous CQI of the mobile station device. The memory 12 stores multiple instantaneous CQIs (or average values thereof) measured for a given period.

The mode-determining unit 13 determines whether to switch between the normal mode and the measurement mode based on the average CQI calculated by the average-CQI calculating unit 11 and a CQI threshold.

The feedback-period calculating unit 14 outputs a feedback period of the instantaneous CQI based on a determination result by the mode determining unit 13 and values of CQI_Interval_1 and CQI_Interval_2.

The average-CQI calculating unit 11 calculates the average CQI by averaging an instantaneous CQI calculated based on a pilot signal included in the downlink shared pilot channel and multiple instantaneous CQIs measured for the past given period that are stored in the memory 12. The new instantaneous CQI is stored in the memory 12, and the instantaneous CQI after a given period has elapsed is deleted from the memory 12. The calculated average CQI is output to the mode determining unit 13.

The mode determining unit 13 compares the average CQI output by the average-CQI calculating unit 11 and the CQI threshold for switching between the normal mode and the measurement mode, and notifies the feedback-period calculating unit 14 of a mode (the normal mode or the measurement mode). The feedback-period calculating unit 14 outputs, as the instantaneous-CQI feedback period to the base station device, a period of CQI_Interval corresponding to the mode notified by the mode determining unit 13.

FIG. 6 is a block diagram showing a configuration of the base station device according to the first embodiment of the present invention. The base station device includes a communication unit 40, a timer 41, a control unit 42, a resource-allocation-period setting unit 43 (resource-allocation-period setting unit).

The communication unit 40 receives the instantaneous CQI measured by the instantaneous-CQI measuring unit 33 of the mobile station device (shown in FIG. 4), and transmits and receives packet data to and from the mobile station device through radio communication.

The timer 41 measures time. The control unit 42 controls each unit of the base station device. The resource-allocation-period setting unit 43 sets the period for a radio resource allocation to the mobile station device. The base station device measures the period set by the resource-allocation-period setting unit 43 using the timer, and receives the instantaneous CQI from the mobile station device.

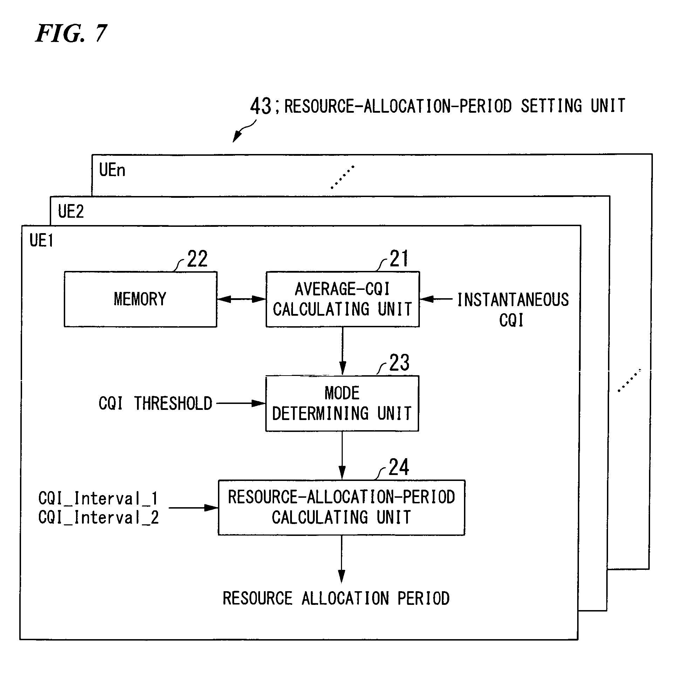

FIG. 7 is a block diagram showing a configuration of the resource-allocation-period setting unit 43 (shown in FIG. 6) according to the first embodiment of the present invention. For the number of the mobile station devices, the resource-allocation-period setting unit 43 includes an average-CQI calculating unit 21, a memory 22, a mode determining unit 23 (second mode determining unit), and a resource-allocation-period calculating unit 24.

The average-CQI calculating unit 21 calculates the average CQI based on the instantaneous CQI notified by the mobile station device. The memory 22 stores multiple instantaneous CQIs measured for a given period (or average values thereof).

The mode determining unit 23 determines whether to switch between the normal mode and the measurement mode based on the average CQI calculated by the average-CQI measuring unit 21 and the CQI threshold. The resource-allocation-period calculating unit 24 outputs an uplink resource allocation period to the mobile station device for the instantaneous-CQI feedback based on values of CQI_Interval_1 and CQI_Interval_2.

The average-CQI calculating unit 21 provided for each mobile station device calculates the average CQI by averaging the instantaneous CQI fed back from the mobile station device and the instantaneous CQIs fed back from the mobile station device and stored in the memory 22 for the past given period. The new instantaneous CQI is stored in the memory 22, and the instantaneous CQI after a given period has elapsed is deleted from the memory 22. The calculated average CQI is output to the mode determining unit 23.

The mode determining unit 23 compares the average CQI output from the average-CQI calculating unit 21 and the CQI threshold for switching between the normal mode and the measurement mode, and notifies the resource-allocation-period calculating unit 24 of a mode (the normal mode or the measurement mode). The resource-allocation-period calculating unit 24 outputs, as a resource allocation period to be used for the uplink instantaneous CQI feedback, a period of CQI_Interval corresponding to the mode notified by the mode determining unit 23.

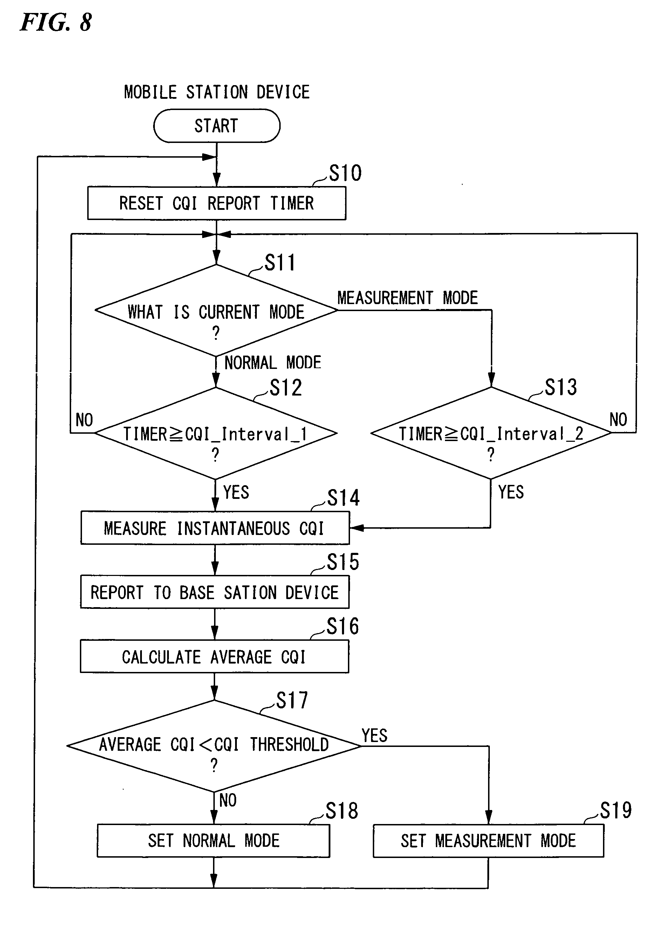

FIG. 8 is a flowchart showing processing of the feedback-period setting unit according to the first embodiment of the present invention. Firstly, the average-CQI calculating unit 11 resets a CQI report timer (step S10). Whether the current mode of the mobile station device is the normal mode or the measurement mode is determined (step S 11). If it is the normal mode, whether or not a value of the timer is equal to or greater than CQI_Interval_1 is determined (step S12). If the value of the timer is equal to or greater than CQI_Interval_1, the processing proceeds to step S14. On the other hand, if the value of the timer is smaller than CQI_Interval_1, the processing proceeds to step S11.

If it is the measurement mode at step S 11, whether or not the value of the timer is equal to or greater than CQI_Interval_2 is determined (step S 13). If the value of the timer is equal to or greater than CQI_Interval_2, the processing proceeds to step S 14.

On the other hand, if the value of the timer is smaller than CQI_Interval_2, the processing proceeds to step S11.

The feedback-period calculating unit 14 calculates an instantaneous CQI based on CQI_Interval_1 and CQI_Interval_2 (step S14), and reports information concerning the instantaneous CQI to the base station device by feedback (step S 15).

The average-CQI calculating unit 11 calculates an average CQI using the instantaneous CQI calculated at step S 14 and the instantaneous CQIs stored in the memory 12 (step S16).

The mode determining unit 13 determines whether or not the average CQI is smaller than the CQI threshold (step S 17). If the average CQI is equal to or greater than the CQI threshold, the determining unit 13 sets the normal mode to the mobile station device (step S 18). On the other hand, if the average CQI is smaller than the CQI threshold, the determining unit 13 sets the measurement mode to the mobile station device (step S 19).

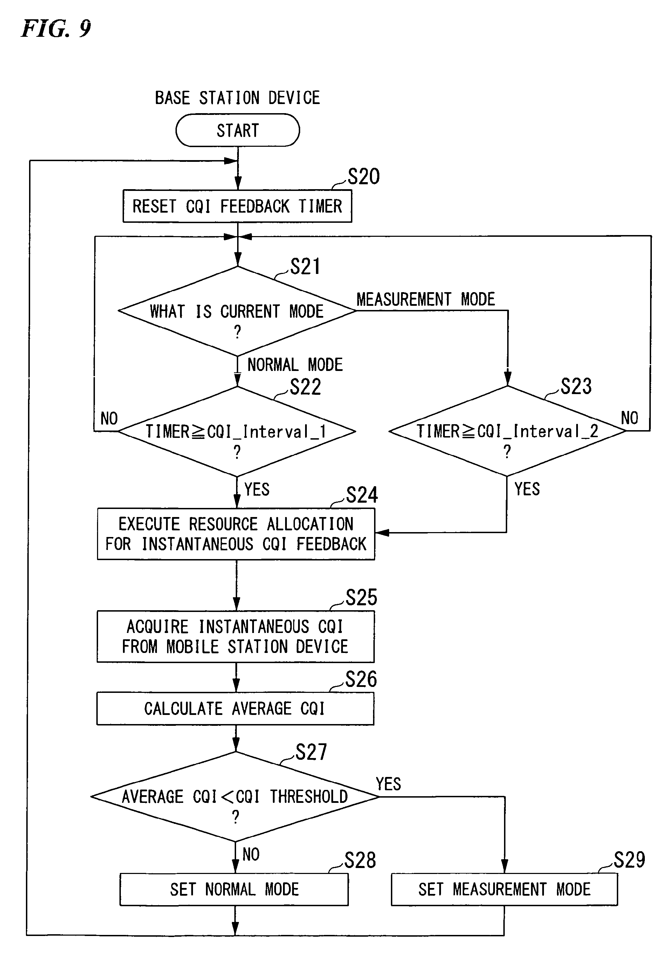

FIG. 9 is a flowchart showing processing of the resource-allocation-period setting unit according to the first embodiment of the present invention. Firstly, the average-CQI calculating unit 21 resets the CQI-feedback timer (step S20). Whether a current mode of the base station device is the normal mode or the measurement mode is determined (step S21). If it is the normal mode, whether a value of the timer is equal to or greater than CQI_Interval_1 is determined (step S22). If the value of the timer is equal to or greater than CQI_Interval_1, the processing proceeds to step S24. On the other hand, if the value of the timer is smaller than CQI_Interval_1, the processing proceeds to step S21.

If it is the measurement mode at step S21, whether or not the value of the timer is equal to or greater than CQI_Interval_2 is determined (step S23). If the value of the timer is equal to or greater than CQI_Interval_2, the processing proceeds to step S24. On the other hand, if the value of the timer is smaller than CQI_Interval_2, the processing proceeds to step S21.

The resource-allocation-period calculating unit 24 allocates an uplink resource for an instantaneous CQI feedback to the mobile station device based on CQI_Interval_1 and CQI_Interval_2 (step S24), and acquires the instantaneous CQI fed back from the mobile station device (step S25).

The average-CQI calculating unit 21 calculates an average CQI using the instantaneous CQI acquired at step S24 and the instantaneous CQIs stored in the memory 22, stores the instantaneous CQI in the memory, and deletes the instantaneous CQI after a given period has elapsed (step S26).

The mode determining unit 23 determines whether or not the average CQI is smaller than the CQI threshold (step S27). If the average CQI is equal to or greater than the CQI threshold, the mode determining unit sets the normal mode to the base station device (step S28). On the other hand, if the average CQI is smaller than the CQI threshold, the mode determining unit sets the measurement mode to the base station device (step S29).

The mobile station device and the base station device that are used in the first embodiment of the present invention control the instantaneous-CQI measurement period by feedback of the instantaneous CQI from the mobile station device to the base station device and by sharing the instantaneous CQI. However, the feedback and the sharing of the instantaneous CQI are difficult in the FDD (Frequency Division Duplex) system since massive amounts of radio resources are required to accurately notify the base station device of conditions of the downlink propagation path. Therefore, instantaneous CQI simplified and averaged in the frequency region are fed back. For example, the mobile station device feeds, back to the base station device, difference values of the measured instantaneous CQI with respect to the frequency or the time axis, instantaneous CQI of top Mu resource blocks in a good condition of the propagation path among Ma resource blocks (Ma>Mu), the number corresponding to AMC (Adaptive Modulation and Coding) such as a modulation method and an encoding rate that are calculated from the instantaneous CQI, etc.

In other words, the mobile station device executes the instantaneous-CQI-measurement-period control determination based on the detailed conditions of the downlink propagation path, and notifies the base station device of the instantaneous-CQI-measurement-period control signal, thereby enabling more precise or flexible instantaneous-CQI measurement-period control.

An example of this circuit configuration is explained below. Although, in the circuit configuration below similar to the above embodiment, the instantaneous-CQI measurement-period control is executed using the instantaneous CQI for simplicity of explanation, the instantaneous-CQI measurement-period control may be executed using another determination criterion.

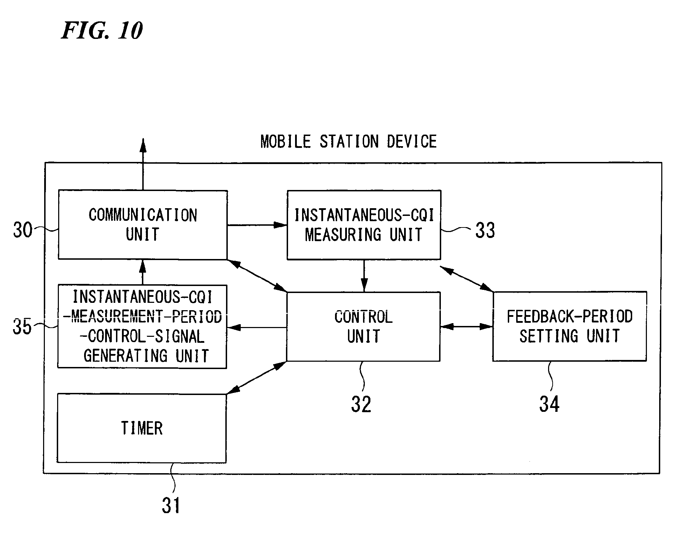

FIG. 10 shows another example of the mobile station device according to the first embodiment of the present invention. This mobile station device includes the communication unit 30, the timer 31, the control unit 32, the instantaneous-CQI measuring unit 33, the feedback-period setting unit 34, and an instantaneous-CQI-measurement-period-control-signal generating unit 35.

The elements other than the control unit 32 and the instantaneous-CQI-measurement-period-control-signal generating unit 35 are the same as those shown in FIG 4, therefore, the explanation thereof is omitted.

The control unit 32 controls each unit of the mobile station device. The instantaneous-CQI-measurement-period-control-signal generating unit 35 generates a signal for notifying the base station device of that the measurement mode and the normal mode of the mobile station device are switched (i.e., the instantaneous-CQI-measurement-period is switched).

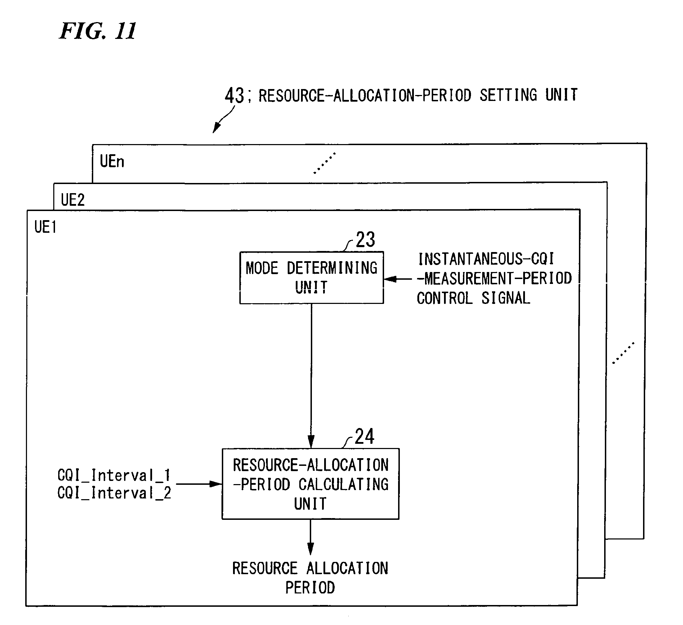

FIG. 11 shows another example of the resource-allocation-period setting unit 43 (shown in FIG. 6) of the base station device according to the first embodiment of the present invention. This resource-allocation-period setting unit 43 includes a mode determining unit 23 and a resource-allocation-period calculating unit 24.

The mode determining unit 23 determines whether the mobile station device is in the normal mode or the measurement mode based on the instantaneous-CQI-measurement-period control signal transmitted from the mobile station device, and outputs a determination result.

Alternatively, if an instantaneous-CQI measurement period is directly transmitted from the mobile station device, the mode determining unit 23 outputs the value thereof.

Based on the determination result of the mode determining unit 23, the resource-allocation-period calculating unit 24 outputs CQI_Interval_1 as the resource allocation period if it is the normal mode, and CQI_Interval_2 as the resource allocation period if it is the measurement mode.

In addition, if the instantaneous-CQI measurement period is directly transmitted from the mobile station device, the resource-allocation-period calculating unit 24 outputs the value thereof as the resource allocation period.

Although omitted in the above explanation, it is preferable to continue the processing after an ACK signal is transmitted from the base station device to the mobile station device when the instantaneous-CQI-measurement-period control signal is transmitted from the mobile station device to the base station device.

As explained above, the mobile station device executes the instantaneous-CQI measurement-period determination in addition to the feedback of the instantaneous CQI to the base station device, thereby enabling a reduction in power consumption of the mobile station device when notifying the base station device of a signaling control signal (instantaneous-CQI-measurement-period control signal).

Hereinafter, a mobile communication system according to a second embodiment is explained.

As explained in the first embodiment, requirements of the instantaneous-CQI measurement-period in the active mode differ depending on propagation path loss and fading variation. The factor includes a movement of the mobile station device. For example, when the mobile station device moves from a vicinity of the center of a cell to a cell edge, the propagation path loss increases, and the fading variation also increases with the movement.

In the present embodiment, the instantaneous-CQI measurement period of CQI_Interval_1 and CQI_Interval_2 in the normal mode and the measurement mode of the mobile station device in the arrive mode is changed according to the traveling speed of the mobile station device.

Similar to the first embodiment, two instantaneous-CQI measurement periods shown in FIG. 3 are set in the present embodiment. Further, the mobile station device in the present embodiment includes a traveling-speed estimating unit that estimates the traveling speed of the mobile station device. For example, the traveling-speed estimating unit can calculate the traveling speed by periodically specifying the position of the mobile station device using a GPS (Global Positioning System) or measuring the Doppler shift of a received signal. The processing for calculating the traveling speed may be executed by the base station device, and information concerning the traveling speed may be output from the base station device to the mobile station device.

The information concerning the traveling speed of the mobile station device is shared with the base station device by a notification from the mobile station device or the base station device, or the processing of measuring the uplink and downlink Doppler shift.

Instantaneous-CQI measurement periods C1 and C2 in the present embodiment are expressed as follows using the traveling speed v, coefficients K1 and K2, and the threshold velocity V.

When $v < V$,

$$C1 = CQI\_Interval\_1 - v \times K1 \qquad \text{Equation (1)}$$

$$C2 = CQI\_Interval\_2 - v \times K2 \qquad \text{Equation (2)}$$

When $v \geq V$,

$$C1 = CQI\_Interval\_1 \qquad \text{Equation (3)}$$

$$C2 = CQI\_Interval\_2 \qquad \text{Equation (4)}$$

K1 and K2 are positive real numbers.

Equations (1) to (4) indicate that the instantaneous-CQI measurement periods become shorter as the traveling speed v of the mobile station device becomes faster until the traveling speed v becomes V, and that the instantaneous-CQI measurement periods become constant (CQI_Inteval_1 and CQI_Inteval_2 in this case, but other fixed values may be used) irrespective of the traveling speed v when the traveling speed v becomes V.

The reason why the threshold velocity V is provided is to cope with the situation in which delay occurs from when the mobile station device notifies the base station device of the instantaneous CQI to when the instantaneous CQI is reflected in the downlink communication, but the conditions of the propagation path vary greatly for a mobile station device which is traveling fast, and the mobile station device cannot follow the condition variation of the propagation path, thereby causing deterioration of the channel quality. In other words, although a low-bit-rate distributed allocation is considered to be executed for a mobile station device whose velocity exceeds the velocity V, the frequent feedback of instantaneous CQI is unnecessary then.

Hereinafter, a mobile communication system according to a third embodiment is explained.

The first and the second embodiments are applied specifically to Intra-RAT-HO (and Inter-Freq-HO) in the present embodiment.

In EUTRA/EUTRAN, it is necessary that mobile station devices having different frequency bands (e.g., 1.25 MHz, 2.5 MHz, 5 MHz, 10 MHz, 15 MHz, and 20 MHz) belong to base station devices having different system frequency bands (e.g., 1.25 MHz, 2.5 MHz, 5 MHz, 10 MHz, 15 MHz, and 20 MHz). For the mobile station devices that belong to different system frequency bands and have different frequency bands, a monitoring and measuring method of a peripheral base station device in the idle mode and the active mode for Intra-RAT-HO (and Intra-Freq-HO) has been proposed (NTT DoCoMo, Inc., "Cell Search Method in Connected and Idle Mode for E-UTRA Downlink", 3GPP TSG RAN WG1 LTE Ad Hoc Meeting, Helsinki, Finland, 23-25, January, 2006).

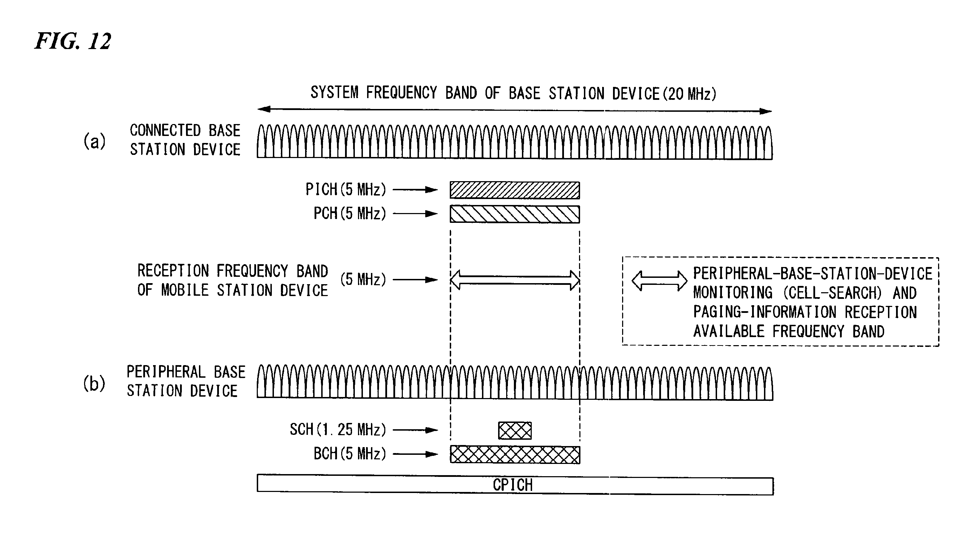

In FIG. 12, (a) and (b) schematically show the monitoring and measuring method of a peripheral base station device in the idle mode when the system frequency band of the base station device is 20 MHz and the frequency band of the mobile station device is 5 MHz. Since the broadcast channel and the synchronization channel are symmetrically mapped to the center of the system frequency band of the base station device, an initial monitoring of the base station device (initial cell search) when the power of the mobile station device is turned on, and a monitoring of a peripheral base station device in the idle mode (peripheral search) are executed using the center frequency band of the base station device (e.g., 1.25 MHz, 5 MHz). On the other hand, when a call is detected by the reception of paging information through the paging indicator channel and the paging channel, the mobile station device enters the active mode by shifting the frequency band to a predetermined allocated frequency band according to an instruction of the base station device (frequency shift).

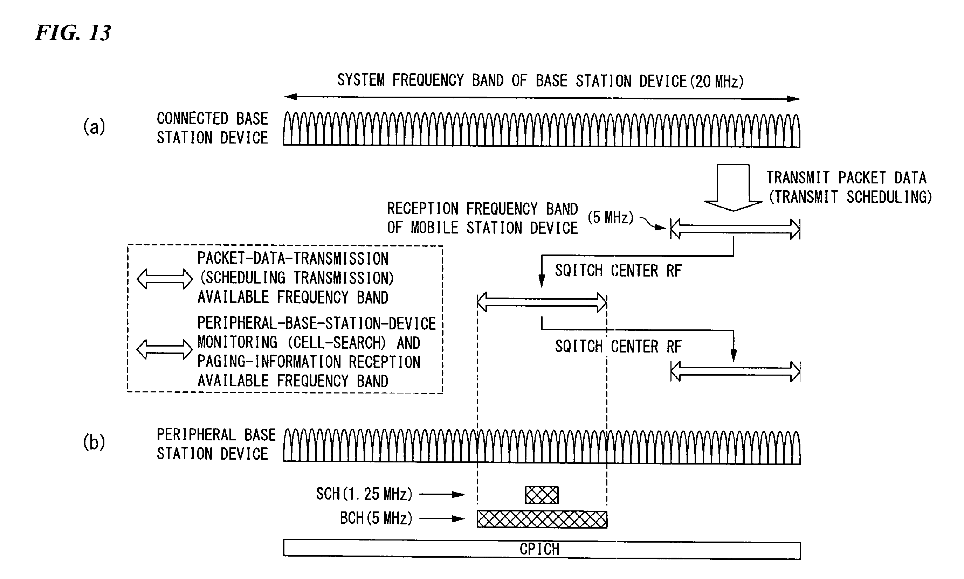

In FIG. 13, (a) and (b) schematically show a monitoring or measuring method of a peripheral base station device in the active mode when the system frequency band of the base station device is 20 MHz and the frequency band of the mobile station device is 5 MHz as an example. The mobile station device receives packet data in a predetermined frequency band in the active mode, and executes the instantaneous CQI measurement at a given CQI measurement period and the feedback to the base station device. Since the broadband channel and the synchronization channel are mapped symmetrically to the center of the system frequency band of the base station device, it is necessary to execute monitoring of a peripheral base station device in the active mode (peripheral search) in the center frequency band of the base station device (e.g., 1.25 MHz and 5 MHz), thereby necessitating switching of the radio frequency of the mobile station device. For a handover between the base station devices utilizing the same frequency band in the EUTRA/EUTRAN system, i.e., Intra-RAT-HO (and Intra-Freq-HO), switching of the radio frequency of the mobile station device occurs similarly to Intra-RAT-HO (and Inter-Freq-HO) and Inter-RAT-HO (and Inter-Freq-HO) explained in the first embodiment, and a gap generation for monitoring or measuring a peripheral base station device is necessary.

In the present embodiment, the gap-generation control methods in the active mode shown in the first and the second embodiments are applied for Intra-RAT-HO (and Intra-Freq-HO). The control operation is the same as the methods explained in the first and the second embodiments, therefore the explanation thereof is omitted.

Hereinafter, a mobile communication system according to a fourth embodiment of the present invention is explained.

As explained in the first embodiment, the mobile station device has the idle mode for monitoring a downlink PICH (Paging Indicator Channel) and a peripheral base station device.

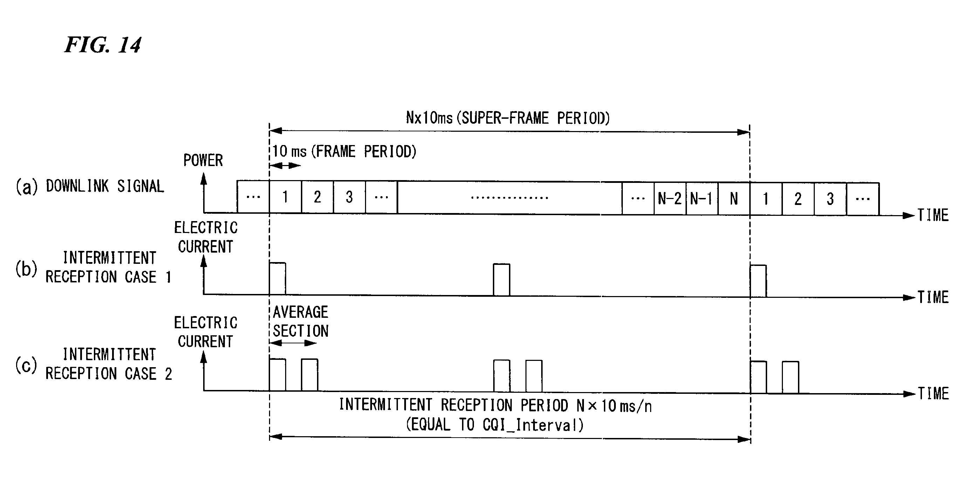

In FIG. 14, (a) to (c) schematically show an intermittent reception of the mobile station device in the idle mode. As shown in FIG. 14 at (a) to (c), the horizontal and the vertical axes represent time and power, respectively. N radio frames are regarded as one super-frame, and the downlink signal consists of frames f1, f2, f3, ..., fN-2, fN-1, and fN as shown in FIG. 14 at (a) to (c). As shown in FIG. 1, the shared pilot channel, the broadcast channel, and the synchronization channel are mapped to the head of each frame.

The mobile station device receives the downlink channel, the paging indicator channel for detecting presence/absence of an incoming call packet, the shared pilot channel for measuring an instantaneous CQI, the synchronization channel and shared pilot channel of a peripheral base station device when a monitoring of the peripheral base station device is necessary, and a broadcast channel for acquiring unique information of the base station device.

After completing the intermittent reception, the mobile station device enters the low power consumption mode again, and repeats the intermittent reception with a preliminarily-defined intermittent-reception period. As explained above, since the monitoring of the peripheral base station device and the measuring of an instantaneous CQI are executed during the intermittent reception, the preliminarily-defined intermittent-reception period is equal to the instantaneous-CQI measurement period in the idle mode. In FIG. 14, (b) and (c) are schematics showing an example of the intermittent reception. In the case of FIG. 14 at (b), n intermittent reception intervals are included in one super-frame, and the head TTI in one frame is received in one reception interval. One instantaneous CQI is measured in one reception interval. In the case of FIG. 14 at (c), multiple frames are received in one reception interval for channel quality enhancement. In the case of FIG. 14 at (c), two frames are received, and the monitoring of the peripheral base station device is executed using an average of the two instantaneous CQIs. A combination other than the cases of FIG. 14 at (b) and (c) may be used.

As explained above, there is a trade-off between the length of the intermittent reception period in the idle mode, i.e., the instantaneous-CQI measurement period, and the consumed current (idle time) of the mobile station device and the incoming detection rate. When the period is long (n is small), the power consumption of the mobile station device can be reduced since the rate of a reception section with respect to a non-reception section is small. However, a response to an incoming call is slow since the non-reception section is long.

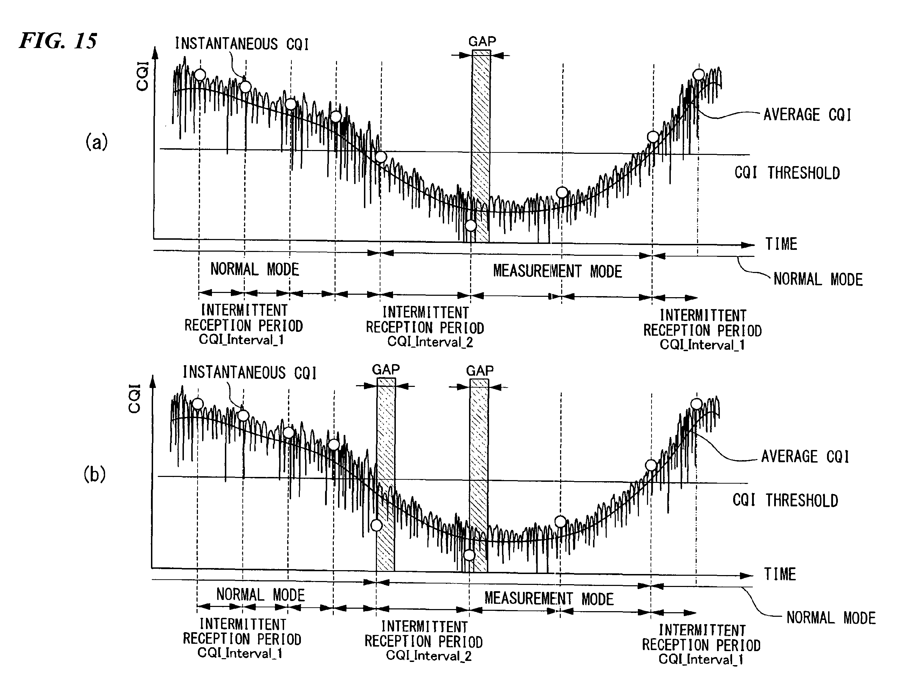

In the present embodiment, as shown in FIG. 15, similar to the active mode, the two different values, i.e., CQI_ Interval_1 and CQI_Interval_2 are defined with respect to the intermittent reception period in the idle mode, i.e., the instantaneous-CQI measurement period of CQI_Interval, and the two values are selected such that CQI_Interval_1<CQI_ Interval_2. A long period is usually set to CQI_Interval compared with that in the active mode.

A value satisfying the system requirements in the normal mode is selected for CQI_Interval_1, and a value satisfying system requirement is selected for CQI_Interval_2 in consideration of a system parameter in the measurement mode such as a system utilization efficiency and a load of radio links (the number of subscribers).

In FIG. 15, (a) and (b) show states in which a gap is generated when the instantaneous CQI becomes below the average CQI in the measurement mode.

In FIG. 15, (a) shows a state in which an instantaneous CQI was measured with a period of CQI_Interval_1 in the normal mode, an instantaneous CQI was measured with a period of CQI_Interval_2 in the measurement mode, and a gap section was generated at the second period of CQI_Interval_2 after it entered the measurement mode.

In FIG 15, (b) shows a state in which an instantaneous CQI was measured with a period of CQI_Interval_1 in the normal mode, an instantaneous CQI was measured with a period of CQI_Interval_2 in the measurement mode, a gap section was generated simultaneously when it was determined to be the measurement mode, and another gap section was generated at the second period.

When CQI_Interval_2 is longer than CQI_Interval_1, the incoming detection rate of the mobile station device decreases. However, the possibility of connection to the base station device decreases, and resource blocks are not occupied, thereby enabling enhancement of resource-block utilization efficiency for another mobile station device.

Additionally, since CQI_Interval_2 is long, the number of monitoring a peripheral base station device in the measurement mode decreases, and the idle period of the mobile station device increases. For example, if 2x CQI_Interval_1=CQI_ Interval_2, the number of monitoring a peripheral base station device in the measurement mode decreases by half.

The program executed by the base station device and the mobile station device in the present embodiment is a program for controlling the CPU, etc., to change the instantaneous-CQI measurement period related to the present embodiment (a program causing a computer to function). The information utilized by these devices is temporarily stored in RAM upon the processing, then stored in various ROMs or HDDs, read by the CPU according to need, and modification or writing is executed.

A recording medium for storing the program may be any of a semiconductor medium (such as ROM, a nonvolatile memory card), an optical recording medium (such as a DVD, an MO, an MD, a CD, and a BD), a magnetic recording medium (such as magnetic tape or a flexible disc), etc.

Not only the functions of the embodiments are implemented by executing the loaded program, but the functions of the mobile station device and the base station device are implemented by the processing with an operating system or another application program based on the instruction of the program in some cases.

Upon distribution to the market, the program can be stored in a portable recording medium to be distributed, or transmitted to a server connected through a network such as the Internet. In this case, a storage device of the server is included in the recording medium of the present embodiment.

The radio communication system of the present embodiment is assumed to be applied to an FDD (Frequency Division Duplex) system, but can be applied to a TDD (Time Division Duplex) system. Since the same frequency is used for uplink and downlink in the case of TDD, propagation path conditions can be shared between the base station device and the mobile station device without feedback of an instantaneous CQI.

Although the term of the instantaneous-CQI measurement period is used in the present embodiment, this period includes a period and an interval for measuring a CQI. In other words, a period for actually receiving the shared pilot channel and calculating an instantaneous CQI and an interval from when the instantaneous CQI is calculated to when the next shared pilot channel is received are included. In the embodiments explained above, at least one of the period and the interval is switched between the normal mode and the measurement mode. A measurement period or interval is not fixed to one value, but may be appropriately changed according to operational conditions of a radio communication system.

Although the embodiments of the present invention are explained above, the configuration is not limited thereto, and different configurations may be used without departing from the scope of the present invention.

**Claims**

1. A mobile communication system including a mobile station device and a base station device,
   the mobile station device having a plurality of modes concerning a gap section control in a state of being wirelessly connected to the base station device and comprising a feedback-period setting unit that sets a feedback period for notifying the base station device of information concerning a downlink channel quality indication in each of the modes based on downlink-data requirement conditions, and

the base station device comprising a resource-allocation-period setting unit that sets an uplink resource allocation period for feedback of the downlink channel quality indication in each of the modes or a downlink resource allocation period based on the downlink-data requirement conditions.

2. A mobile communication system including a mobile station device and a base station device,

the mobile station device having a plurality of modes concerning a gap section control in a state of being wirelessly connected to the base station device and comprising a feedback-period setting unit that sets a feedback period for notifying the base station device of information concerning a downlink channel quality indication in each of the modes based on a traveling speed of the mobile station device, and

the base station device comprising a resource-allocation-period setting unit that sets an uplink resource allocation period for feedback of the downlink channel quality indication in each of the modes or a downlink resource allocation period based on the traveling speed of the mobile station device.

3. A mobile communication system including a mobile station device and a base station device,

the mobile station device comprising:

a first mode determining unit that determines, in a state where the mobile station device is wirelessly connected to the base station device, which one of modes defined based on a downlink channel quality indication the mobile station device is in; and

an intermittent-reception-period setting unit that sets, according to the determined mode, an intermittent reception period for confirming a call from the base station device in an idle state.

4. The mobile communication system according to claim 1, wherein the modes include a measurement mode in which the mobile station device can execute monitoring of a peripheral base station.

5. The mobile communication system according to claim 1, wherein the modes include a normal mode in which the mobile station device ceases to execute monitoring of a peripheral base station.

6. A mobile station device wirelessly connected to a base station device, comprising:

a first mode determining unit that determines which one of modes concerning a gap section control the mobile station device is in; and

a feedback-period setting unit that sets a feedback period for notifying the base station device of information concerning a downlink channel quality indication in the determined mode based on downlink-data requirement conditions.

7. A mobile station device wirelessly connected to a base station device, comprising:

a first mode determining unit that determines which one of modes concerning a gap section control the mobile station device is in; and

a feedback-period setting unit that sets a feedback period for notifying the base station device of information concerning a downlink channel quality indication in the determined mode based on a traveling speed of the mobile station device.

8. A mobile station device wirelessly connected to a base station device, comprising:

a first mode determining unit that determines which one of modes defined based on a downlink channel quality indication the mobile station device is in; and

an intermittent-reception-period setting unit that sets, according to the determined mode, an intermittent reception period for confirming a call from the base station device in an idle state.

9. A base station device wirelessly connected to a mobile station device, comprising:

a second mode determining unit that determines which one of modes concerning a gap section control the mobile station device is in; and

14

a resource-allocation-period setting unit that sets an uplink resource allocation period for feedback of the downlink channel quality indication in the determined mode or a downlink resource allocation period based on downlink-data requirement conditions or a traveling speed of the mobile station device.

**10.** A mobile communication method, comprising:

setting, by a mobile station device having a plurality of modes concerning a gap section control in a state of being wirelessly connected to a base station device, a feedback period for notifying the base station device of information concerning a downlink channel quality indication in each of the modes based on downlink-data requirement conditions or a traveling speed of the mobile station device;
determining, by the base station device, which one of the modes the mobile station device is in; and
setting, by the base station device, an uplink resource allocation period for feedback of the downlink channel quality indication in the determined mode or a downlink resource allocation period based on the downlink-data requirement conditions or the traveling speed of the mobile station device.

**11.** A mobile communication method, comprising:

determining, by a mobile station device wirelessly connected to a base station device, which one of modes defined based on a downlink channel quality indication the mobile station device is in; and
setting, by the mobile station device, an intermittent reception period for confirming a call from the base station device in an idle state according to the determined mode.

**12.** A mobile communication method, comprising:

setting, by a mobile station device having a plurality of modes concerning a gap section control in a state of being wirelessly connected to a base station device, a feedback period for notifying the base station device of information concerning a downlink channel quality indication in each of the modes based on downlink-data requirement conditions or a traveling speed of the mobile station device;
determining, by the base station device, which one of the modes the mobile station device is in; and
setting, by the mobile station device, an uplink resource allocation period for feedback of the downlink channel quality indication in the determined mode or a downlink resource allocation period based on the downlink-data requirement conditions or the traveling speed of the mobile station device.

## FIG. 1

FIG. 2

*FIG. 3*

(a)

CQI

INSTANTANEOUS CQI

AVERAGE CQI

CQI THRESHOLD

TIME

NORMAL MODE     MEASUREMENT MODE     NORMAL MODE

(b)

CQI

AVERAGE CQI

INSTANTANEOUS CQI

TIME

CQI_Interval_1

(c)

CQI

GAP

AVERAGE CQI

INSTANTANEOUS CQI

TIME

CQI_Interval_2

EP 1 986 349 A1

*FIG. 4*

30

MOBILE STATION DEVICE

33

| COMMUNICATION UNIT | INSTANTANEOUS-CQI MEASURING UNIT |

| TIMER | CONTROL UNIT | FEEDBACK-PERIOD SETTING UNIT |

31                    32                    34

*FIG. 5*

34

FEEDBACK-PERIOD SETTING UNIT

12
MEMORY

11
AVERAGE-CQI CALCULATING UNIT ← INSTANTANEOUS CQI

13
CQI THRESHOLD → MODE DETERMINING UNIT

14
CQI_Interval_1
CQI_Interval_2 → FEEDBACK-PERIOD CALCULATING UNIT

FEEDBACK PERIOD

*FIG. 6*

40

BASE STATION DEVICE

COMMUNICATION UNIT

TIMER

CONTROL UNIT

RESOURCE-ALLOCATION-PERIOD SETTING UNIT

41                    42                    43

*FIG. 7*

43; RESOURCE-ALLOCATION-PERIOD SETTING UNIT

UEn

UE2

UE1

| | | |
|---|---|---|
| MEMORY /22 | ←→ | AVERAGE-CQI CALCULATING UNIT /21 | ← INSTANTANEOUS CQI |

CQI THRESHOLD → MODE DETERMINING UNIT /23

CQI_Interval_1
CQI_Interval_2 → RESOURCE-ALLOCATION-PERIOD CALCULATING UNIT /24

RESOURCE ALLOCATION PERIOD

*FIG. 8*

MOBILE STATION DEVICE

START

S10
RESET CQI REPORT TIMER

S11
WHAT IS CURRENT MODE ? — MEASUREMENT MODE

NORMAL MODE

S12
TIMER ≧ CQI_Interval_1 ? — NO

S13
TIMER ≧ CQI_Interval_2 ? — NO

YES

YES

S14
MEASURE INSTANTANEOUS CQI

S15
REPORT TO BASE SATION DEVICE

S16
CALCULATE AVERAGE CQI

S17
AVERAGE CQI < CQI THRESHOLD ? — YES

NO

S18
SET NORMAL MODE

S19
SET MEASUREMENT MODE

*FIG. 9*

BASE STATION DEVICE

START

RESET CQI FEEDBACK TIMER — S20

S21

WHAT IS CURRENT MODE ? — MEASUREMENT MODE

NORMAL MODE

S22

TIMER≧CQI_Interval_1 ? — NO

S23

TIMER≧CQI_Interval_2 ? — NO

YES — S24

EXECUTE RESOURCE ALLOCATION FOR INSTANTANEOUS CQI FEEDBACK ← YES

S25

ACQUIRE INSTANTANEOUS CQI FROM MOBILE STATION DEVICE

S26

CALCULATE AVERAGE CQI

S27

AVERAGE CQI<CQI THRESHOLD ? — YES

NO — S28

SET NORMAL MODE

S29

SET MEASUREMENT MODE

## FIG. 10

MOBILE STATION DEVICE

30 — COMMUNICATION UNIT

33 — INSTANTANEOUS-CQI MEASURING UNIT

35 — INSTANTANEOUS-CQI -MEASUREMENT-PERIOD -CONTROL-SIGNAL GENERATING UNIT

CONTROL UNIT

32

FEEDBACK-PERIOD SETTING UNIT

34

TIMER

31

## FIG. 11

43; RESOURCE-ALLOCATION-PERIOD SETTING UNIT

UEn

UE2

UE1

23
MODE DETERMINING UNIT

INSTANTANEOUS-CQI -MEASUREMENT-PERIOD CONTROL SIGNAL

CQI_Interval_1
CQI_Interval_2

24
RESOURCE-ALLOCATION -PERIOD CALCULATING UNIT

RESOURCE ALLOCATION PERIOD

FIG. 12

# FIG. 13

SYSTEM FREQUENCY BAND OF BASE STATION DEVICE (20 MHz)

(a) CONNECTED BASE STATION DEVICE

TRANSMIT PACKET DATA (TRANSMIT SCHEDULING)

RECEPTION FREQUENCY BAND OF MOBILE STATION DEVICE (5 MHz)

PACKET-DATA-TRANSMISSION (SCHEDULING TRANSMISSION) AVAILABLE FREQUENCY BAND

PERIPHERAL-BASE-STATION-DEVICE MONITORING (CELL-SEARCH) AND PAGING-INFORMATION RECEPTION AVAILABLE FREQUENCY BAND

SQITCH CENTER RF

SQITCH CENTER RF

(b) PERIPHERAL BASE STATION DEVICE

SCH (1. 25 MHz) ⟶

BCH (5 MHz) ⟶

CPICH

EP 1 986 349 A1

**FIG. 14**

Nx10ms (SUPER-FRAME PERIOD)

10 ms (FRAME PERIOD)

POWER

(a) DOWNLINK SIGNAL

... 1 2 3 ... ............... ... N-2 N-1 N 1 2 3 ... → TIME

ELECTRIC CURRENT

(b) INTERMITTENT RECEPTION CASE 1

→ TIME

ELECTRIC CURRENT

AVERAGE SECTION

(c) INTERMITTENT RECEPTION CASE 2

→ TIME

INTERMITTENT RECEPTION PERIOD N × 10 ms/n
(EQUAL TO CQI_Interval)

EP 1 986 349 A1

**FIG. 15**

(a)

(b)

EP 1 986 349 A1

FIG. 16

FIG. 17

(a) DPCH(DL) CONTINUOUS DATA CH

(b) HS-SCCH(DL) CONTROL CH

(c) HS-PDSCH(DL) PACKET DATA CH

TIME

GAP

FRAME (10 ms)

SUB-FRAME (2 ms)

IDENTIFICATION INFORMATION CONCERNING PACKET DATA (HS_PDSCH) ADDRESSED TO MOBILE STATION DEVICE

HS_PDSCH ALLOCATION IMPOSSIBLE SECTION

## FIG. 18

(a)

☷ COMMUNICATION AVAILABLE AREA

▨ DIFFERENT-FREQUENCY/DIFFERENT-RADIO-ACCESS-TECHNOLOGY MEASUREMENT AREA

INSTANTANEOUS CQI

AVERAGE CQI

INSTANTANEOUS CQI

CQI

TIME

NORMAL MODE    MEASUREMENT MODE    NORMAL MODE

INSTANTANEOUS CQI

(b)

g1 g2 g3 g4 g5

AVERAGE CQI

CQI

TIME

CQI_Interval

EP 1 986 349 A1

## INTERNATIONAL SEARCH REPORT

| International application No. |
| --- |
| PCT/JP2007/052744 |

A.   CLASSIFICATION OF SUBJECT MATTER
*H04B7/26(2006.01)i, H04J11/00(2006.01)i, H04J13/00(2006.01)i*

According to International Patent Classification (IPC) or to both national classification and IPC

B.   FIELDS SEARCHED

Minimum documentation searched (classification system followed by classification symbols)
H04B7/24-7/26, H04Q7/00-7/38

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br><br>A | JP 2002-354523 A  (NEC Communication Systems, Ltd.),<br>06 December, 2002 (06.12.02),<br>Par. Nos. [0004] to [0007]<br>& US 2002/0187785 A1    & EP 1263253 A2 | 1-3,7,9-10, 12<br>4-6,8,11 |
| X<br><br>A | JP 2003-244057 A  (Mitsubishi Electric Corp.),<br>29 August, 2003 (29.08.03),<br>Par. Nos. [0002] to [0021]<br>& US 2003/0153370 A1    & EP 1337048 A2 | 4,8,11<br>1-3,5-7,<br>9-10,12 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 May, 2007 (16.05.07) | 29 May, 2007 (29.05.07) |

| Name and mailing address of the ISA/<br>Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
|---|
| PCT/JP2007/052744 |

C (Continuation).   DOCUMENTS CONSIDERED TO BE RELEVANT

| Category* | Citation of document, with indication, where appropriate, of the relevant passages | Relevant to claim No. |
|---|---|---|
| A | NTT DoCoMo, Inc.,'Measurements for LTE Intra- and Inter-RAT Mobility',3GPP TSG RAN WG2 #50 Tdoc-R2-060086, [online]. The 3rd Generation Partnership Project, 2006.01.05. [retrieved on 2007-05-09]. Retrieved from the Internet: <URL:http://www.3gpp.org/ftp/tsg_ran/WG2_RL2/ TSGR2_50/Documents/R2-060086.zip>, full text | 1-12 |
| A | JP 2005-244991 A  (Samsung Electronics Co., Ltd.), 08 September, 2005 (08.09.05), Claims 7, 8, 18; Par. Nos. [0004], [0007], [0011] to [0012], [0020] to [0021], [0037], [0042], [0050] to [0051] & US 2005/0191965 A1     & EP 1569492 A2 | 1-12 |
| A | JP 10-262274 A  (Fujitsu Ltd.), 29 September, 1998 (29.09.98), Par. No. [0006] & US 6108548 A | 1-12 |
| A | JP 2004-235800 A  (Evolium S.A.S.), 19 August, 2004 (19.08.04), Claims 2, 3; Par. Nos. [0005], [0017], [0043], [0050] & US 2004/0147264 A1     & EP 1443787 A1 | 1-12 |
| A | JP 2005-260906 A  (Toshiba Corp.), 22 September, 2005 (22.09.05), Par. No. [0008] & EP 1499144 A1 | 1-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006040905 A


**Non-patent literature cited in the description**

- **KEIJI TACHIKAWA.** *W-CDMA Mobile Communication System,* ISBN 4-621-04894-5